# EUROPÄISCHE PATENTSCHRIFT

(11) **EP 3 676 110 B1**
(45) Veröffentlichungstag und Bekanntmachung des Hinweises auf die Patenterteilung: **24.03.2021**
(21) Anmeldenummer: 18765370.4
(22) Anmeldetag: 23.08.2018
(51) Int. Cl.: B60D 1/36, B60D 1/62, G07C 5/00, B60W 50/00, H04L 29/06

(54) **ANHÄNGER-STEUERVORRICHTUNG ZUM MONTIEREN AN EINEM ANHÄNGER**
TRAILER CONTROL DEVICE FOR MOUNTING ON A TRAILER
DISPOSITIF DE COMMANDE DE REMORQUE CONÇU POUR ÊTRE MONTÉ SUR UNE REMORQUE

(30) Priorität: 31.08.2017 DE 102017119970
(43) Veröffentlichungstag der Anmeldung: 08.07.2020
(73) Patentinhaber: SAF-HOLLAND GmbH, 63856 Bessenbach (DE)
(72) Erfinder: KÖSTER, Mario Sebastian, 78351 Bodman-Ludwigshafen (DE)
(74) Vertreter: Müller Schupfner & Partner Patent- und Rechtsanwaltspartnerschaft mbB
(86) Internationale Anmeldenummer: PCT/EP2018/072780
(87) Internationale Veröffentlichungsnummer: WO 2019/042862

(56) Entgegenhaltungen:
- US-A- 5 905 433
- US-A1- 2008 303 648
- US-A1- 2009 236 825
- US-B1- 9 738 125

## Beschreibung

Die vorliegende Erfindung betrifft eine Anhänger-Steuervorrichtung zum Montieren an einem Anhänger, einen Anhänger, an dem eine Anhänger-Steuervorrichtung montiert ist und ein System zum Auffinden und/oder zur Identifikation eines Anhängers mit einer Anhänger-Steuervorrichtung.

Üblicherweise erfolgt die Identifikation von Anhängern, d. h. sogenannten Trailern, zumeist manuell. Hierfür wird ein Fahrer einer Zugmaschine entweder von einem Logistikmitarbeiter eingewiesen oder muss den anzukuppelnden Anhänger eigenständig aufsuchen. Vorrichtungen oder Systeme zum automatischen Auffinden eines Anhängers sind bisher nicht bekannt.

Die US 2008/0303648 A1 zeigt eine Kommunikationseinrichtung zwischen einem Traktor und einem Trailer mit einer sicheren Verbindung unter Ausnutzung einer kabelgebundenen Verbindung.

Die US 2009/0236825 A1 befasst sich mit einem System zur Unterstützung der Aus-richtung eines Kupplungskopfes, welcher an einer Rückseite eines Fahrzeugs montiert ist, in Relation zu einer Kupplung, welche an einer Vorderseite eines Anhängers montiert ist.

Die US 5,905,433 A betrifft ein Anhängerkommunikationssystem, mit einer Sendeeinheit, die an einem Anhänger befestigt ist. Die Sendeeinheit kann dabei Informationen in Form von akustischen Signalen bei einer Ultraschallfrequenz kommunizierend bereitstellen.

Die US 9,738,125 B1 zeigt ein System, ein Verfahren und eine Vorrichtung in Verbindung zu Datenakquise und Kommunikation bei Fahrzeugsystemen.

Der vorliegenden Erfindung liegt somit die Aufgabe zugrunde, eine Vorrichtung bereitzustellen, mit welcher ein Anhänger automatisch auffindbar ist. Ferner liegt der vorliegenden Erfindung die Aufgabe zugrunde einen automatisch auffindbaren Anhänger sowie ein entsprechendes System zum Auffinden bzw. zur Identifikation eines Anhängers bereitzustellen.

Diese Aufgabe wird gelöst durch einen Anhänger gemäß Anspruch 1 und mit einem System zum Auffinden und/oder zur Identifikation eines Anhängers gemäß Anspruch 10.

Erfindungsgemäß wird ein Anhänger gemäß Anspruch 1 offenbart.

Die vorgeschlagene Anhänger-Steuervorrichtung des Anhängers gemäß Anspruch 1 umfasst folglich eine Empfangseinheit, welche ein externes Signal empfangen kann. Das externe Signal kann beispielsweise ein GPS-Signal oder ein GPRS-Signal oder ein Funksignal von einem lokalen Sendemasten sein. Das externe empfangene Signal kann beispielsweise eine Abfrage eines ID-Codes und/oder Koordinaten hinsichtlich der aktuellen Position und/oder Anhänger-spezifische Daten umfassen oder eine andere Abfrage zum Abfragen einer Identität und/oder der Position des Anhängers. Ferner umfasst die Anhänger-Steuervorrichtung einen Komparator, welcher mit der Empfangseinheit verbunden ist. Der Komparator dient zum Vergleichen des empfangenen Signals mit einem in dem Komparator hinterlegten vorgegebenen Signal. Das vorgegebene Signal kann beispielsweise ein Identifikations-Code sein. Das vorgegebene Signal wird in dem Komparator mit dem empfangenen Signal verglichen. Wenn das empfangene Signal mit dem vorgegebenen Signal übereinstimmt, so sendet eine mit dem Komparator verbundene Sendeeinheit ein Antwortsignal an eine externe Empfangseinheit , sodass die Anhänger-Steuervorrichtung aufgefunden werden kann und/oder identifiziert werden kann. Die externe Sendeeinheit und die externe Empfängereinheit können zwei voneinander getrennte Einheiten sein oder können in einer einzigen Einheit ausgebildet vorliegen. Ferner können die Empfangseinheit der Anhänger-Steuervorrichtung und die Sendeeinheit der Anhänger-Steuervorrichtung als zwei voneinander getrennte Einheiten ausgebildet sein oder in einer Einheit zusammengefasst ausgebildet sein. Jedenfalls stehen sowohl die Empfangseinheit, als auch die Sendeeinheit mit dem Komparator in Signalverbindung. Die Verbindung zum Komparator kann beispielsweise über eine Drahtverbindung oder drahtlos vorliegen. Bei einer Drahtlos-Verbindung kann beispielsweise eine Bluetooth-Verbindung oder dergleichen die Kommunikation zwischen der Empfangseinheit, dem Komparator und der Sendeeinheit herstellen. Die vorgeschlagene Anhänger-Steuervorrichtung an einem Anhänger zu montieren hat den Vorteil, dass die Anhänger-Steuervorrichtung automatisch auffindbar und/oder identifizierbar ist.

Gemäß einer weiteren bevorzugten Ausführungsform der Anhänger-Steuervorrichtung weist die Anhänger-Steuervorrichtung eine Verschlüsselungseinheit zum Verschlüsseln des Antwortsignals und/oder eine Entschlüsselungseinheit zum Entschlüsseln des empfangenen Signals auf. Insbesondere ist/sind die Verschlüsselungseinheit und/oder die Entschlüsselungseinheit zwischen der Empfangseinheit und dem Komparator bzw. zwischen der Sendeeinheit und dem Komparator geschaltet. Das empfangene Signal kann folglich als ein verschlüsseltes Signal von der Empfangseinheit empfangen werden. Die Empfangseinheit sendet dann zunächst das empfangene Signal an die Entschlüsselungseinheit weiter, in welcher das empfangene Signal zunächst entschlüsselt wird. Es ist ebenfalls denkbar, dass die Entschlüsselungseinheit in der Empfangseinheit integriert ist und ein empfangenes Signal automatisch noch in der Empfangseinheit entschlüsselt wird. Anschließend wird das entschlüsselte Signal an den Komparator übergeben, wo es mit dem vorgegebenen Signal verglichen wird. Bei Übereinstimmung des empfangenen Signals mit dem vorgegebenen Signal wird ein Antwortsignal an die Sendeeinheit weitergegeben, welches von der Verschlüsselungseinheit, mit welcher die Sendeeinheit verbunden ist, verschlüsselt wird, bevor es von der Sendeeinheit an die externe Empfängereinheit gesandt wird. Es ist denkbar, dass die Verschlüsselungseinheit in der Sendeeinheit integriert ist und eine Verschlüsselung eines ausgehenden Antwortsignals automatisch erfolgt. Die Verschlüsselungseinheit bzw. die Entschlüsselungseinheit haben jeweils den Vorteil, dass eine sichere Kommunikation zwischen der Anhänger-Steuervorrichtung und einer externen Empfangseinheit bzw. einer externen Sendeeinheit hergestellt werden kann.

Bevorzugt weist die Anhänger-Steuervorrichtung eine Positions-Bestimmungseinheit auf, welche insbesondere als eine GPS-Einheit ausgebildet ist. Die Positions-Bestimmungseinheit dient zum Bestimmen einer aktuellen Position der Anhänger-Steuervorrichtung. Insbesondere steht die Positions-Bestimmungseinheit mit dem Komparator und/oder der Verschlüsselungseinheit oder der Entschlüsselungseinheit zur Kommunikation in Signalverbindung. Die Positions-Bestimmungseinheit ist ferner bevorzugt dazu ausgebildet, mit einer weiteren externen GPS-Einheit zu kommunizieren, um die aktuelle Position der Anhänger-Steuervorrichtung abzufragen. Dies hat den Vorteil, dass stets eine aktuelle Position der Anhänger-Steuervorrichtung von der Anhänger-Steuervorrichtung abgefragt werden kann und an eine externe Empfängereinheit übersendet werden kann. Hierdurch kann stets die aktuelle Position der Anhänger-Steuervorrichtung aufgefunden bzw. identifiziert werden.

Weiter bevorzugt weist die Anhänger-Steuervorrichtung eine Speichereinheit zum Speichern des vorgegebenen Signals und/oder der aktuellen Position und/oder des Antwortsignals und/oder des Antwortsignals und/oder anderer Daten auf. Insbesondere ist die Speichereinheit mit mindestens einer der anderen in der Anhänger-Steuervorrichtung umfassten Einheiten zur Kommunikation verbunden. Besonders bevorzugt steht die Speichereinheit mit dem Komparator in Signalverbindung. Weiter besonders bevorzugt, ist die Speichereinheit mit allen weiteren in der Anhänger-Steuervorrichtung umfassten Einheiten direkt oder in transitiver Weise in Signalverbindung stehend. Eine Speichereinheit in der Anhänger-Steuervorrichtung weist den Vorteil auf, dass eine Chronologie hinsichtlich der eingenommenen bzw. aktuellen Positionen der Anhänger-Steuervorrichtung oder hinsichtlich einer anderen Information, beispielsweise die Beladung des Anhängers oder dergleichen, in der Anhänger-Steuervorrichtung hinterlegt ist. Eine solche Chronologie hinsichtlich der Position oder hinsichtlich einer anderen Information kann insbesondere in Abhängigkeit der Zeit hinterlegt sein. Hierdurch kann beispielsweise die Nutzung der Anhänger-Steuervorrichtung bzw. eines Anhängers an dem die Anhänger-Steuervorrichtung montiert ist, dokumentiert werden.

Bevorzugt erfolgt die Kommunikation der verschiedenen Einheiten der Anhänger-Steuervorrichtung unter anderem mittels Drahtverbindung oder mittels Drahtlos-Verbindung, insbesondere über Bluetooth oder dergleichen.

Weiter bevorzugt weist die Anhänger-Steuervorrichtung eine Energiequelle zum Versorgen der Anhänger-Steuervorrichtung mit Energie auf. Die Energiequelle kann beispielsweise mittels einer Ladestation, insbesondere umfassend eine Batterie und/oder eine Solarzelle, und/oder mittels einer Verbindung zwischen der Anhänger-Steuervorrichtung und einem Anhänger, an welchem die Anhänger-Steuervorrichtung montiert ist, elektrisch in Kontakt sein, sodass die Energiequelle über den Anhänger, welcher insbesondere mit einer Zugmaschine verbunden ist, geladen werden kann.

Bevorzugt sind die ausgesendeten und empfangenen Signale jeweils Funksignale. Insbesondere können die ausgesendeten und empfangenen Signale mittels GPS an eine externe Empfangseinheit bzw. von einer externen Sendeeinheit übermittelt werden. Ferner können die Funksignale auch mittels lokaler Sendemasten an bzw. von der Anhänger-Steuervorrichtung gesendet werden. Vorliegend ist unter dem Begriff "Signal" auch ein "Antwortsignal" oder ein Signal zur Abfrage einer aktuellen Position der Anhänger-Steuervorrichtung gemeint.

Die Erfindung betrifft einen Anhänger, an dem eine Anhänger-Steuervorrichtung, insbesondere nach einer der bereits beschriebenen Anhänger-Steuervorrichtungen, zum Empfangen und Senden eines Signals montiert ist, insbesondere dauerhaft montiert ist. Der Anhänger umfasst dabei die Anhänger-Steuervorrichtung, welche mindestens eine Empfangseinheit zum Empfangen eines Signals, eine Sendeeinheit zum Senden eines Antwortsignals und einen Komparator aufweist. Die Anhänger-Steuervorrichtung ist dabei vorteilhafterweise dauerhaft am Anhänger montiert. In anderen Worten kann dies bedeuten, dass die Anhänger-Steuervorrichtung nicht nur kurzfristig montiert ist, sondern über einen langen Zeitraum, insbesondere über Jahre, an dem Anhänger festgelegt sein soll. Vorteilhafterweise erfolgt diese Festlegung dabei über eine Schraub- und/oder Nietverbindung um ein sicheres und möglichst dauerhaftes Festlegen zu erreichen. Ferner ist die Anhänger-Steuervorrichtung zum Steuern der verschiedenen Einheiten ausgebildet. Der Komparator ist dazu ausgebildet, das zu empfangende Signal mit einem vorgegebenen Signal zu vergleichen. Die Anhänger-Steuervorrichtung ist dazu ausgebildet, nach einem Feststellen einer Übereinstimmung zwischen dem empfangenen Signal und dem vorgegebenen Signal die Sendeeinheit derart zu steuern, dass die Sendeeinheit mindestens ein Antwortsignal zum Auffinden und/oder zur, insbesondere individuellen, Identifikation des Anhängers an eine externe Empfängereinheit sendet. Dies hat den Vorteil, dass ein Anhänger, an dem eine beschriebene Steuereinheit montiert ist, automatisch aufgefunden werden kann bzw. automatisch identifiziert werden kann, sodass Zeit eingespart und Verwechslungen vermieden werden können. Insbesondere kann daher auch ein Auffinden eines Anhängers in einem Fuhrpark mit der vorgeschlagenen Erfindung automatisch erfolgen.

Bevorzugt umfasst das Antwortsignal ein kodiertes Identifikationssignal zum Identifizieren des Anhängers und/oder zum Identifizieren einer aktuellen Position des Anhängers und/oder zur Übermittlung von Anhängerfahrzeugdaten. Ferner kann das kodierte Identifikationssignal anhängerspezifische Informationen, wie beispielsweise die Ausmaße des Anhängers und/oder das Gewicht des Anhängers und/oder das Baujahr des Anhängers oder dergleichen umfassen. Dies hat den Vorteil, dass ein Antwortsignal von mehr als einem Anhänger ausgesendet werden kann, sofern ein den Anhängern zugeordnetes Identifikationssignal jeweils eine Übereinstimmung mit dem abgefragten empfangenen Signal besitzt. Dies hat den Vorteil, dass beispielsweise eine Art eines Anhängers aus einer Mehrzahl von Anhängern automatisch ausgewählt und aufgefunden werden kann. Ein Nutzer kann im Anschluss daran auswählen, welcher Anhänger aufgesucht werden soll.

Gemäß einer bevorzugten Ausführungsform ist die Anhänger-Steuervorrichtung an einer vorgegebenen Position an oder in dem Anhänger angeordnet. Um eine gute Erreichbarkeit, beispielsweise zur Vereinfachung von Reparaturen und/oder Wartungen, der Anhänger-Steuervorrichtung zu erreichen, ist es zweckmäßig, wenn diese unterhalb der Ladefläche des Anhängers angeordnet ist. Alternativ bevorzugt kann die Anhänger-Steuervorrichtung auch auf und/oder an einer die Ladefläche abdeckenden Dachkonstruktion des Anhängers angeordnet sein, da hierdurch das Empfangen und/oder Senden von Signalen vereinfacht bzw. verbessert werden kann. Insbesondere ist die Anhänger-Steuervorrichtung mit einem gleichen Abstand zu zwei Flanken des Anhängers angeordnet und/oder in einem definierten Abstand zu einem Königszapfen des Anhängers angeordnet, um ein, insbesondere eindeutiges, Auffinden des Anhängers zu ermöglichen. Der Abstand zu zwei Flanken des Anhängers gibt beispielsweise eine Breite oder eine Länge des Anhängers an. Durch das Anordnen der Anhänger-Steuervoreinheit an einer vorgegebenen definierten Position des Anhängers kann folglich ein Anhänger eindeutig aufgefunden bzw. identifiziert werden. Insbesondere ein Abstand zu einem Königszapfen des Anhängers kann zur eindeutigen Identifizierung des Anhängers herangezogen werden. Außerdem kann hierdurch eine Erstreckung des Anhängers in allen Raumdimensionen abgefragt werden.

Erfindungsgemäß umfasst das ausgesendete Antwortsignal von der Anhänger-Steuervorrichtung mindestens die folgenden Informationen:
- Angaben zu den Abmessungen des Anhängers (60)
- Position des Königszapfens in Relation zur Anhänger-Steuervorrichtung oder zur Stirnseite des Anhängers.

Bevorzugt umfasst das ausgesendete Antwortsignal von der Anhänger-Steuervorrichtung mindestens eine der folgenden Informationen:
- Fahrzeug-/ und/oder Auftrags-Identifikation
- allgemeine Angaben zum Anhänger, insbesondere Aufsattelhöhe und/oder zulässige Gesamtmasse und/oder Fahrzeugtyp und/oder Bereifung und/oder Baujahr,
- Ausrichtung des Anhängers,
- Auftrags- und/oder Ladungsdaten, insbesondere Daten zum Inhalt und/oder zum Gewicht und/oder Lieferschein,
- Ladungszustand des Anhängers,
- Füllstand eines Tankanhängers,
- Kühlraumtemperatur des Anhängers,
- Wartungszustand und/oder Wartungsintervalle und/oder Daten der letzten Wartung des Anhängers,
- Reifendruck des Anhängers,
- Laufleistung des Anhängers,
- Fehler- und Wartungsprotokoll des Anhängers,
- Zugriffsprotokolle auf den Frachtraum des Anhängers.

Je nach empfangenem Signal, welches eine Abfrage der möglichen Informationen umfasst, kann das Antwortsignal eine mögliche Kombination der aufgelisteten Information umfassen. Es ist ferner denkbar, dass weitere abfragbare Informationen von einem Nutzer in die Anhänger-Steuervorrichtung programmierbar bzw. speicherbar sind.

Bevorzugt ist an dem Anhänger und/oder an der Anhänger-Steuervorrichtung zur manuellen Überprüfung zusätzlich eine optische Identifikation, insbesondere ein Barcode, ein Matrixcode, ein Nummerncode oder ein Farbcode angeordnet. Dies hat den Vorteil, dass nach einem automatischen Auffinden bzw. Identifikation des Anhängers der Anhänger nochmals manuell von einem Anwender überprüft werden kann. Hierdurch können Fehlankopplungen des Anhängers an einer Zugmaschine zusätzlich ausgeschlossen werden.

Ein weiterer Aspekt der vorliegenden Erfindung betrifft ein System zum Auffinden und/oder zur Identifikation eines Anhängers gemäß einem der Ansprüche 1-9, welche an einem Anhänger, insbesondere an einem bereits beschriebenen Anhänger, montiert ist. Das vorgeschlagene System weist ferner eine externe Sendeeinheit zum Senden eines Signals an die Anhänger-Steuervorrichtung zum Auffinden des Anhängers und eine externe Empfangseinheit zum Empfangen eines Antwortsignals von der Anhänger-Steuervorrichtung zum Auffinden und/oder zur Identifikation des aufgefundenen Anhängers auf, wobei die Anhänger-Steuervorrichtung das Antwortsignal aussendet, wenn eine Übereinstimmung zwischen dem empfangenen Signal und einem in der Anhänger-Steuervorrichtung vorgegebenen Signal festgestellt ist. Beispielsweise können die externe Sendeeinheit und die externe Empfangseinheit in einer Zugmaschine oder in einer ortsfesten Logistikeinheit, wie beispielsweise in einem Gebäude, angeordnet sein. Ferner können die externe Sendeeinheit und die externe Empfangseinheit in einer Einheit zusammengefasst sein. Mit dem beschriebenen System kann beispielsweise eine Zugmaschine automatisch einen Anhänger, der an eine beschriebene Anhängervorrichtung angeordnet ist, automatisch auffinden. Ein manuelles Auffinden eines Anhängers ist folglich nicht mehr notwendig. Dies hat den Vorteil, dass ein Auffinden eines Anhängers, beispielsweise in einem Fuhrpark, schneller erfolgen kann.

Bevorzugt ist die Anhänger-Steuervorrichtung an dem Anhänger derart montiert, dass eine externe Empfangseinheit eine Position des aufgefundenen Anhängers, insbesondere eindeutig, identifiziert. Bei Verwendung der Anhänger-Steuervorrichtung an einem Anhänger in dem vorgeschlagenen System kann somit eine Zugmaschine, beispielsweise automatisch, einen Anhänger auffinden bzw. identifizieren. Bevorzugt ist die externe Empfangseinheit in einer, insbesondere ortsfesten, Logistikeinheit oder in einer Zugmaschine angeordnet. Es ist ferner denkbar, dass eine, insbesondere ortsfeste, Logistikeinheit einen Anhänger auffindet bzw. identifiziert und die entsprechenden aktuellen Positionsdaten an einer Zugmaschine übermittelt, sodass die Zugmaschine den entsprechenden Anhänger ansteuern kann.

Gemäß einer bevorzugten Ausführungsform des vorgeschlagenen Systems sendet die externe Sendeeinheit das mindestens eine Signal zeitgleich an mehrere Anhänger-Steuervorrichtungen, wobei insbesondere nur eine Anhänger-Steuervorrichtung nach Feststellung einer Übereinstimmung zwischen dem ausgesendeten Signal und einem in einer Anhänger-Steuervorrichtung hinterlegten vorgegebenen Signal ein Antwortsignal an die externe Empfangseinheit sendet. Dies hat den Vorteil, dass beispielsweise ein Anhänger in einem Fuhrpark automatisch aufgefunden werden kann. Es ist ferner denkbar, dass eine Anhängerart in einem Fuhrpark aufgefunden werden kann. Mit einer Anhängerart ist vorliegend ein Anhänger mit einem vorgegebenen Gewicht oder mit einer vorgegebenen Größe oder dergleichen gemeint. Wird folglich ein Anhänger einer bestimmten Art gesucht, so kann ein Signal an mehrere Anhänger ausgesendet werden, sodass nur Anhänger, welche zu der entsprechenden aufzusuchenden Anhängerart gehören, ein entsprechendes Antwortsignal an die externe Empfangseinheit aussenden. Hiernach ist es dann für einen Nutzer möglich, einen Anhänger auszuwählen und diesen dann eindeutig anzusteuern.

Bevorzugt wird das Antwortsignal einem Nutzer des Anhängers zum Auffinden des Anhängers visuell, insbesondere an einem Navigationssystem, dargestellt. Sitzt ein Nutzer beispielsweise in einer Zugmaschine, so kann der Nutzer mit der Zugmaschine mittels eines Navigationssystems zu dem Anhänger navigiert werden.

Weiter bevorzugt ist das Antwortsignal dazu ausgebildet, einen automatischen Kupplungsvorgang zwischen dem aufgerufenen Anhänger und einer Zugmaschine, welches die externe Empfangseinheit umfasst, insbesondere durch Übermittlung von Ortskoordinaten, zu unterstützen. Mit dem vorgeschlagenen System kann also zunächst ein Anhänger bzw. eine Anhänger-Steuervorrichtung aufgefunden bzw. identifiziert werden und anschließend kann beispielsweise eine Zugmaschine an einen solchen Anhänger gekoppelt werden. Insbesondere erfolgt einer solcher Kupplungsprozess automatisch. Für einen solchen automatischen Kupplungsprozess kann ferner eine Ankupplungssystem umfassend eine Zugmaschine und einen Anhänger vorgesehen sein, wie dieses nachfolgend in der Bildbeschreibung noch erläutert werden wird.

Weitere Vorteile und Merkmale der vorliegenden Erfindung ergeben sich aus der nachfolgenden Beschreibung bevorzugter Ausführungsformen mit Bezug auf die beigefügten Figuren. Es versteht sich, dass einzelne in den jeweiligen Figuren gezeigte Ausführungsformen Merkmale aufweisen können, die auch in anderen Ausführungsformen zum Einsatz gelangen können, auch wenn dies nicht explizit genannt ist und sofern dies nicht aufgrund technischer Gegebenheiten oder explizit ausgeschlossen wurde. Es zeigen:
- Figur 1:: eine schematische Ansicht einer Anhänger-Steuervorrichtung, welche mit einer Sendeeinheit und/oder einer Empfangseinheit wechselwirken kann,
- Figur 2:: ein erfindungsgemäßes System zum Auffinden und/oder zur Identifikation eines Anhängers mit einer Anhänger-Steuervorrichtung,
- Figur 3:: eine alternative Ausführungsform des erfindungsgemäßen Systems,
- Figur 4:: ein System gemäß der Figuren 3 und 2, welches ein Antwortsignal an eine externe Empfangseinheit sendet,
- Figur 5:: einen Anhänger, insbesondere einen Sattelschlepper, an dem eine erfindungsgemäße Anhänger-Steuervorrichtung montiert ist, und
- Figur 6:: eine schematische Draufsicht auf ein Ankupplungssystem, welches nach einer Bestimmung der Position und Ausrichtung eines anzukuppelnden Anhängers in einem Fuhrpark ein Kupplungsprozess nutzbar ist.

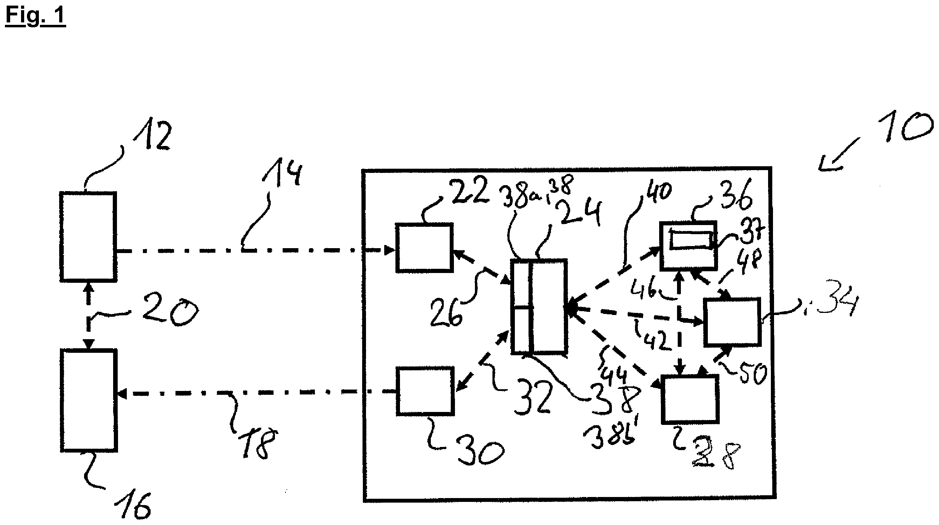

Figur 1 zeigt eine Anhänger-Steuervorrichtung 10, welche mit einer Sendeeinheit 12 kommunizieren kann. Das Kommunizieren zwischen der Sendeeinheit 12 und der Anhänger-Steuervorrichtung 10 ist durch den Pfeil 14 angedeutet. Ferner kann die Anhänger-Steuervorrichtung 10 mit einer Empfangseinheit 16 kommunizieren. Diese Kommunikation ist durch den Pfeil 18 angedeutet. Ferner ist es denkbar, dass die Sendeeinheit 12 und die Empfangseinheit 16 untereinander kommunizieren können, welches durch den Doppelpfeil 20 angedeutet ist. Es ist denkbar, dass die Sendeeinheit 12 und die Empfangseinheit 16 in einer Einheit zusammengefasst sind (nicht dargestellt).

Zum Empfangen eines Signals von der externen Sendeeinheit 12 weist die Anhänger-Steuervorrichtung 10 eine Empfangseinheit 22 auf, welche das empfangene Signal an einen Komparator 24 übergibt. Zwischen der Empfangseinheit 22 und dem Komparator 24 kann es eine Drahtverbindung oder eine Drahtlos-Verbindung geben. Die Kommunikation zwischen dem Komparator 24 und der Empfangseinheit 22 ist in Figur 1 durch den Doppelpfeil 26 dargestellt.

Der Komparator 24 ist dazu ausgebildet, das empfangene Signal mit einem vorgegebenen Signal zu vergleichen. Das vorgegebene Signal kann dabei in dem Komparator 24 selbst oder in einer Speichereinheit 28 hinterlegt sein. Der Komparator 24 und die Speichereinheit 28 können miteinander kommunizieren (Doppelpfeil 44).

Wenn das empfangene Signal mit dem vorgegebenen Signal übereinstimmt, übergibt der Komparator 24 ein Antwortsignal an eine Sendeeinheit 30, welches durch den Doppelpfeil 32 indiziert ist. In der Speichereinheit 28 können neben dem vorgegebenen Signal ferner die aktuelle Position und/oder das Antwortsignal oder andere Daten neu eingespeichert werden oder bereits gespeichert sein.

Insbesondere ist die Speichereinheit 28 mit weiteren Einheiten 34, 36, 38 kommunikativ verbunden. Die Kommunikation der Einheiten 24, 28, 34, 36, 38 untereinander sind durch die Doppelpfeile 40, 42, 44, 46, 48, 50 schematisch angezeigt.

Wie in Figur 1 dargestellt, ist die Speichereinheit 28 beispielsweise mit einer Positions-Bestimmungseinheit 36 gekoppelt. Die Positions-Bestimmungseinheit 36 ist insbesondere als eine GPS-Einheit ausgebildet und dient zur Bestimmung einer aktuellen Position der Anhänger-Steuervorrichtung 10. Die Positions-Bestimmungseinheit 36 ist mit dem Komparator 24 und/oder einer Verschlüsselungseinheit 38, 38b oder einer Entschlüsselungseinheit 38, 38a zur Kommunikation verbunden. Insbesondere ist die Entschlüsselungseinheit 38, 38a bzw. die Verschlüsselungseinheit 38, 38b als eine Einheit ausgebildet. Es ist ferner denkbar, dass die Entschlüsselungseinheit 38a und die Verschlüsselungseinheit 38b als zwei unterschiedliche Einheiten ausgebildet sind. Die Verschlüsselungseinheit 38, 38b oder die Entschlüsselungseinheit 38, 38a sind optional.

Wie in Figur 1 dargestellt, kann die Anhänger-Steuervorrichtung 10 eine Energiequelle 34 aufweisen, welche die weiteren Einheiten der Anhänger-Steuervorrichtung mit Energie versorgt. Die Energiequelle 34 kann beispielsweise mit einem Akkumulator ausgebildet sein, welcher sich aufladen kann, wenn ein Anhänger, an dem die Anhänger-Steuervorrichtung 10 montiert ist, an eine Zugmaschine gekoppelt ist.

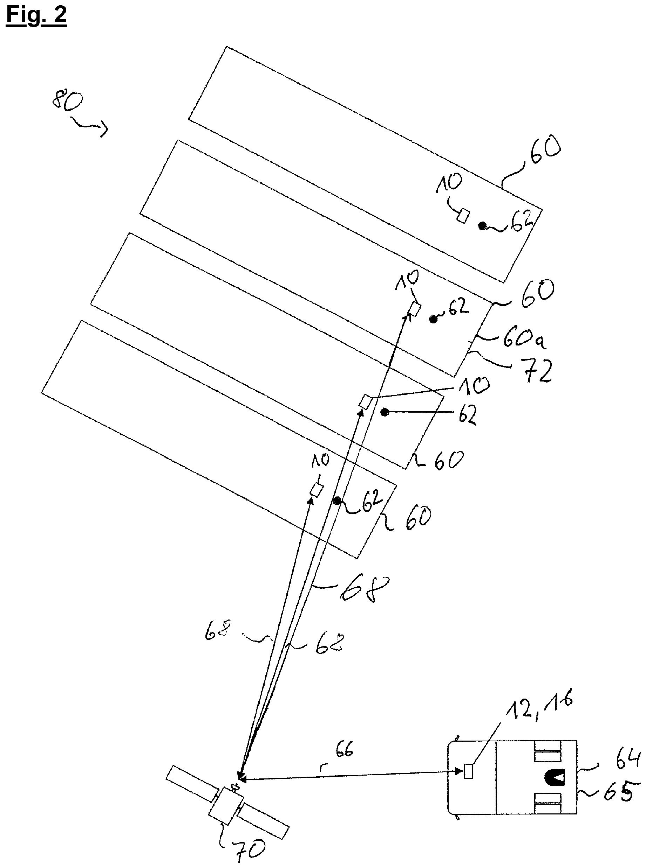

In Zusammenschau der Figuren 2, 3 und 4 werden nachfolgend die Ausführungsformen des erfindungsgemäßen Systems 80 erläutert. Die Figuren 2, 3 und 4 zeigen folglich jeweils ein erfindungsgemäßes System 80. Insbesondere Figur 2 zeigt, wie eine Zugmaschine 64, welches die externe Sende-Einheit 12 und/oder die externe Empfangseinheit 16 umfasst, ein Signal an eine externe GPS-Einheit 70 übersendet. Die externe GPS-Einheit 70 leitet das Signal an die Anhänger-Steuervorrichtungen 10, welche jeweils an einem Anhänger 60 montiert sind, weiter. Die Signalweiterleitungen sind jeweils durch die Pfeile 66 und 68 in Figur 2 gezeigt. Jeder der Anhänger 60 weist neben der Anhänger-Steuervorrichtung 10 einen Königszapfen 62 auf, an welchem die Zugmaschine 64 ankoppelbar ist. Wie in Figur 2 dargestellt, übermittelt die Zugmaschine 64 bzw. die externe Sendeeinheit 12 der Zugmaschine 64 zunächst ein Signal an mehrere Anhänger 60, um die aktuelle Position eines aufzufindenden Anhängers 60a zu ermitteln.

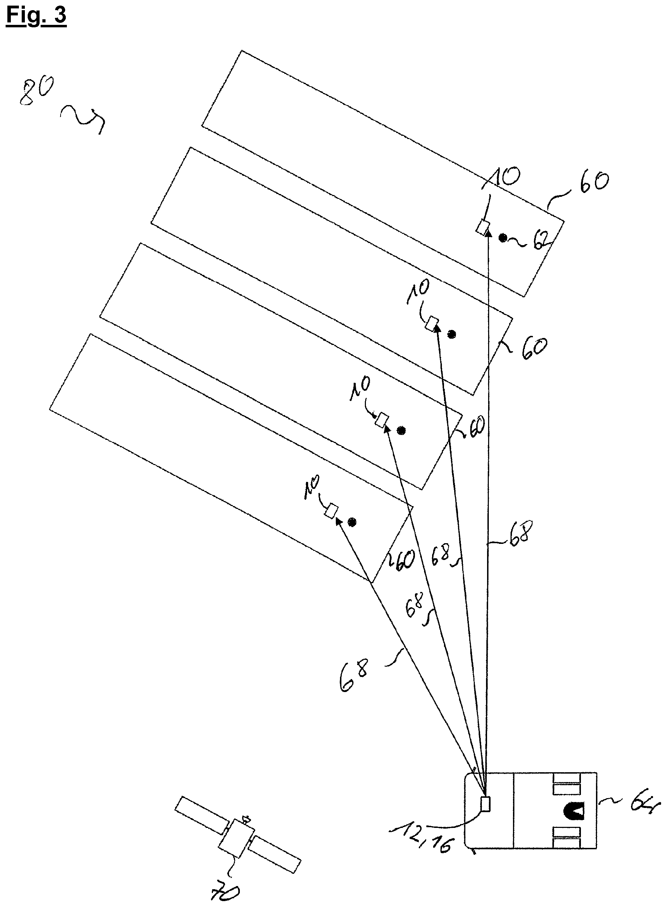

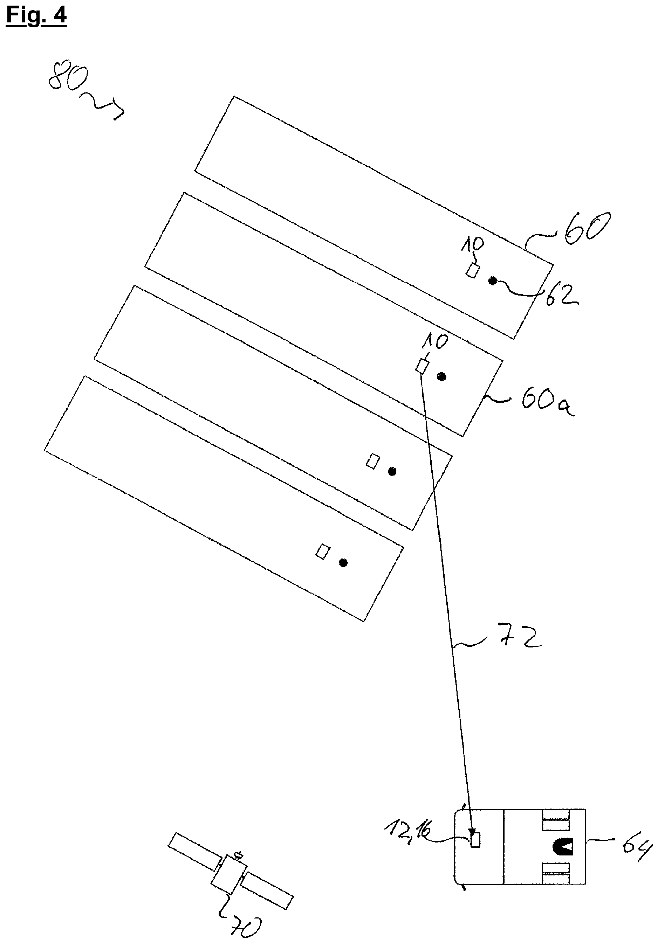

Figur 2 zeigt eine Ausführungsform des Systems, bei dem die Zugmaschine 64 bzw. die ortsfeste Logistikeinheit, das von den Anhängern 60 zu empfangende Signal über eine externe GPS-Einheit 70 an die Anhänger 60 übermittelt. Gemäß der Ausführungsform, welche in Figur 3 dargestellt ist, übersendet die Zugmaschine 64 bzw. die ortsfeste Logistikeinheit das Signal direkt an die Anhänger-Steuervorrichtungen 10 der Anhänger 60. Dies kann beispielsweise auch über lokale Sendemasten erfolgen (nicht dargestellt). Von jedem Anhänger 60 bzw. von jeder Anhänger-Steuervorrichtung 10, welche an einem Anhänger 60 montiert ist, wird das empfangene Signal, wie bereits oben in Bezug auf Figur 1 beschrieben, ausgewertet, d. h. mit einem vorgegebenen Signal verglichen. Bei Übereinstimmung eines vorgegebenen Signals mit dem empfangenen Signal sendet ein Anhänger 60, d. h. der aufzufindende Anhänger 60a, ein Antwortsignal zurück an die Empfangseinheit 16 in der Zugmaschine 64. Bei dem vorgeschlagenen System 80 wird zum Auffinden eines Anhängers 60a aus mehreren Anhängern 60 zunächst ein Abfragesignal an mehrere Anhänger 60 gesandt. Nur bei Übereinstimmung des empfangenen Signals mit einem vorgegebenen Signal, welches vorzugsweise in der Anhänger-Steuervorrichtung 10 hinterlegt ist, sendet der entsprechende Anhänger 60a, welcher aufzufinden ist, ein Antwortsignal zurück an die Zugmaschine 64 bzw. die ortsfeste Logistikeinheit. Durch ein Zurücksenden des Antwortsignals, welches mit dem Bezugszeichen 72 in Figur 4 angedeutet ist, kann der aufzufindende Anhänger 60a identifiziert bzw. aufgefunden werden. Das Auffinden des Anhängers 60a erfolgt insbesondere automatisch. Ein solches Auffinden ist in Figur 4 schematisch dargestellt, wobei ein solches Auffinden sowohl bei einem System gemäß Figur 2 als auch gemäß Figur 3 erfolgt.

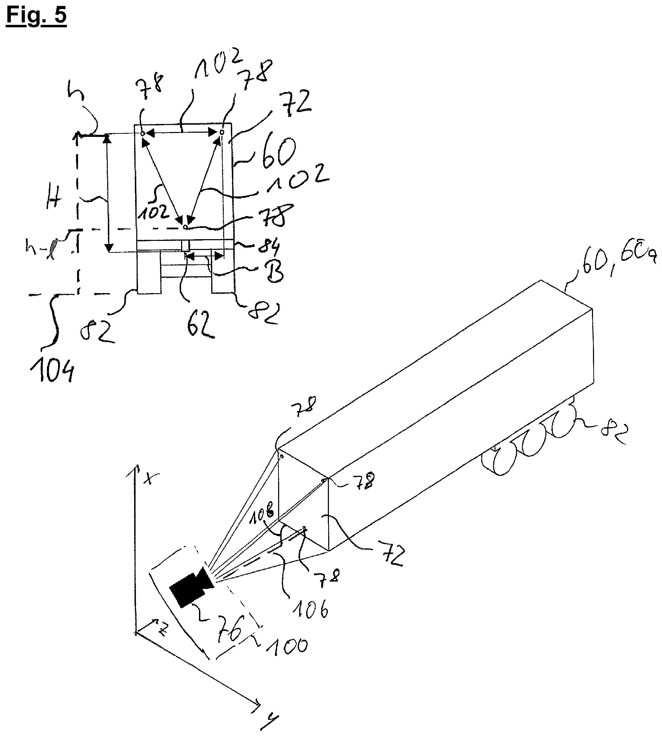

Figur 5 zeigt einen Anhänger 60 bzw. einen aufgefundenen Anhänger 60a, an welchem eine Zugmaschine 64 nach dem Auffinden des Anhängers 60a anzukuppeln ist. Zur Unterstützung des sprozesses zwischen Zugmaschine 64 und Anhänger 60a kann das Antwortsignal insbesondere Ortskoordinaten umfassen, welche ein automatisches Kuppeln zwischen dem Anhänger 60a und der Zugmaschine 64 unterstützt. Nur schematisch dargestellt in Figur 5 ist ein Kamerasystem 76, welches bevorzugt an der Zugmaschine 64 angeordnet ist (nicht dargestellt). Ein solches Kamerasystem 76 kann den Kupplungsprozess zwischen der Zugmaschine 64 und dem Anhänger 60, 60a weiter, insbesondere zur visuellen Anzeige für einen Fahrer der Zugmaschine 64, unterstützen. Zur Unterstützung des Kupplungsprozesses zwischen dem Anhänger 60a und der Zugmaschine 64 sind an dem Anhänger 60 , 60a fest vorgegebene Punkte 78 angeordnet, welche von dem Kamerasystem 76 erfassbar sind. Die fest vorgegebenen Punkte 78 ermöglichen es, den Königszapfen 62, insbesondere durch Unterstützung eines Fahrers, aufzufinden. Denn eine Höhe H und/oder eine Breite B der vorgegebenen Punkte 78 zu dem Königszapfen 62 des Anhängers sind fest vorgegeben und unabhängig von einer Beladung des Anhängers 62. Das Auffinden der vorgegebenen Punkte 78 kann einem Fahrer folglich dazu dienen, den Anhänger 62 korrekt anzufahren, und können von dem Kamerasystem 76 erfasst und verwendet werden, um ggf. genötigte Kurzkorrekturen des Zugmaschine anzuzeigen. Insbesondere eie Höhe h kann sich durch eine Beladung des Anhängers 60, 60a oder durch einen aktuellen Reifendruck der Reifen 82 verändern. Daher ist es von Bedeutung, dass die Höhe H von dem Beladungszustand unabhängig ist. Insbesondere gibt ein fester Punkt 78 einen Abstand zwischen dem Königszapfen 62 und einer äußeren Flanke 84 des Anhängers 60, 60a an.

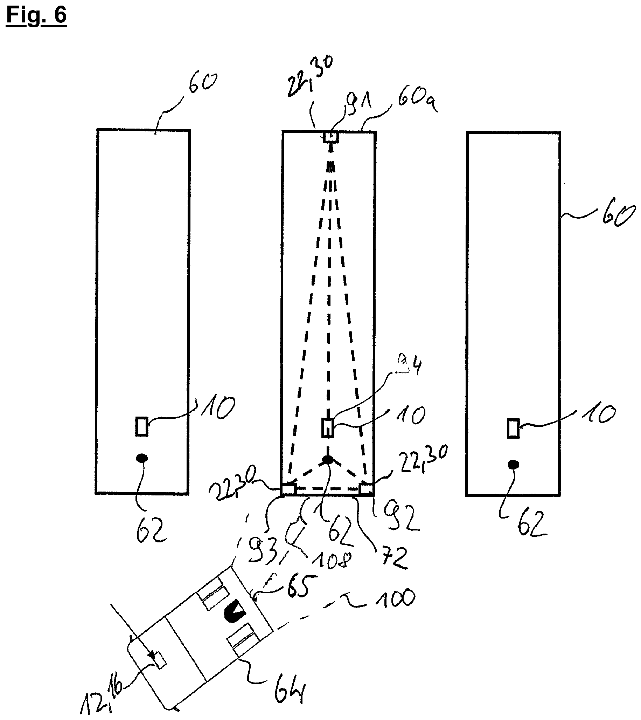

Figur 6 zeigt eine Vielzahl an Anhängern 60, mit jeweils einer Anhänger-Steuervorrichtung 10 und einem Königszapfen 62. Der aufgefunden Anhänger 60a weist ferner ein Ankupplungssystem mit vorgegebene Positionen 91, 92, 93 des aufgefundenen Anhängers 60, 60a auf. Die vorgegebene Positionen 91, 92, 93 des Anhängers 60, 60a können jeweils über eine Sende- und Empfängereinheit erfasst werden. Die erfassten Positionen 91, 92, 93 können dann mittels einer Auswerteeinheit 37, welche in der Anhänger-Steuervorrichtung 10 integriert ist, ausgewertet werden. In der Auswerteeinheit 37 werden beispielsweise Geraden oder Ebenen durch die erfassten Punkte 91, 92 und 93 ermittelt. Es ist ferner denkbar, dass auch die Anhänger-Steuervorrichtung 10 eine erfasste Position 94 darstellt. Die erfassten Positionen 91-94 können dann beispielsweise in Relation zu dem Königszapfen 62 des aufgefundenen Anhängers 60a bestimmt werden. Die Sende- und Empfängereinheit des Anhängers 60, 60a fragt beispielsweise über ein externes GPS-System 70 oder über lokale Sendemasten die aktuelle Position ab, d. h. die Koordinaten des entsprechenden vorgegebenen Punktes 91-94. Mittels der erfassten Punkte 91-94 wird mit einer Software die Position und Ausrichtung des Anhängers 60, 60a, insbesondere in Relation zu dem Königszapfen bestimmt und ggf. in der Speichereinheit 28 hinterlegt. Bevorzugt werden die erforderlichen Positionsdaten mittels Drahtlosverbindung von der Anhänger-Steuereinheit 10 an eine Zugmaschine 64 übertragen, sodass die Zugmaschine 64 den aufgefundenen Anhänger 60a ansteuern kann und eine Kupplung zwischen der Zugmaschine 64 und dem Anhänger 60a durchgeführt werden kann.

Nach einem Auffinden des Anhängers 60a steuert die Zugmaschine 64 den aufgefundenen Anhänger 60a an, um diesen anzukuppeln. Zur Durchführung des Ankupplungsprozesses erfasst die Detektionseinheit 100, welche insbesondere ein Kamerasystem 76 und/oder ein Sensorsystem umfasst und auf einer Ankupplungsseite 65 der Zugmaschine 64 angeordnet ist, das detektierbare Muster 77 auf einer Ankupplungsseite 72 des Anhängers 60, 60a, wobei das detektierbare Muster 77 durch die vorgegebenen Punkte 78 gegeben ist. Die Detektionseinheit 100 kann das detektierbare Muster 77 beispielsweise mittels Ultraschall und/oder optisch oder dergleichen erfassen. Wie in Figur 5 dargestellt sind die vorgegebenen Punkte 78 in einer Dreieckskonfiguration auf der Ankupplungsseite 72 angeordnet, wobei zwei vorgegebene Punkte jeweils an einem oberen äußeren Bereich, oberhalb einer Erdoberfläche 104 in einer Höhe h angeordnet sind und ein fest vorgegebener Punkt 78 oberhalb des Königszapfens 62 in einer Höhe h-l oberhalb der Erdoberfläche 104 angeordnet ist, wobei die Höhe h-l kleiner als die Höhe h ist. Es ist denkbar, dass das detektierbare Muster 77 in einer anderen Konfiguration der fest vorgegebenen Punkte an der Ankupplungsseite 72 angeordnet ist, insbesondere mit einer anderen Anzahl an fest vorgegebenen Punkten. Die Detektionseinheit 100 ist mit einer Steuereinheit, insbesondere per Drahtverbindung oder per Drahtlosverbindung, zum Auswerten des detektierbaren Musters 77 verbunden. Bei einer Auswertung wird, insbesondere mittels Triangulation, eine aktuelle Entfernung 106 und/oder ein aktueller Winkel 108 zwischen dem Anhänger 60, 60a und der Zugmaschine 64 und/oder eine Höhe h des Anhängers 60, 60a bestimmt. Die Auswertung erfolgt bevorzugt auf Basis der Teilanzahl an Pixeln, welche das detektierbare Muster 77 erfasst haben. Sind der aktuelle Winkel 108 und/oder die aktuelle Entfernung 106 für einen optimalen Ankupplungsprozess nicht gegeben, so können beispielsweise Radeinstellungen der Zugmaschine 64 geändert werden, so dass ein Ankupplungsprozess bestmöglich durchführbar ist. Die fest vorgegebenen Punkte 78 sind auf der Ankupplungsseite 72 des Anhängers 60, 60a in einem fest vordefinierten Abstand 102 angeordnet. Ein fest vorgegebener Abstand 102 zwischen zwei fest vorgegebenen Punkten 78 kann ein anderer sein, als ein fest vorgegebener Abstand 102 zwischen zwei anderen fest vorgegebenen Punkten 78, wie dies beispielsweise der Dreieckskonfiguration gemäß Figur 5 zu entnehmen ist.

Die Detektionseinheit 100, insbesondere das Kamerasystem 75, erfasst ein Bild mit einer fest vorgegebenen Gesamtanzahl an Pixeln, wobei das detektierbare Muster 77 und/oder die Anhängerflanken in einer Teilanzahl der Gesamtanzahl an Pixel erfasst ist und durch Auswertung der Teilanzahl an Pixeln, auf denen das detektierbare Muster 77 und/oder die Anhängerflanken erfasst ist/sind, eine aktuelle Entfernung 106 und/oder ein Winkel 108 zwischen der Detektionseinheit 100 und dem Anhänger 60, 60a ermittelbar ist. Insbesondere ist eine Höhe h des Anhängers 60, 60a von der Erdoberfläche 104 durch die Detektionseinheit 100 ermittelbar. Die erfasste Höhe h gibt folglich einer Entfernung zur Erdoberfläche 104 an, wodurch ein Beladungszustand des Anhängers 60, 60a abgeschätzt werden kann. Insbesondere kann durch die Höhenbestimmung h eine Überladung des Anhängers 60, 60a festgestellt werden, bei welchem ein Ankupplungsprozess zu einer Beschädigung an der Zugmaschine 64 und/oder dem Anhänger 60, 60a führen würde. Je weniger Pixel das detektierbare Muster 77 erfassen, desto größer ist der die aktuelle Entfernung 106 zwischen dem Anhänger 60, 60a und der Zugmaschine 64. Hingegen, je mehr Pixel das detektierbare Muster 77 erfassen, desto kleiner ist die aktuelle Entfernung 106 zwischen dem Anhänger 60, 60a und der Zugmaschine 64. Ferner weist eine asymmetrische Verteilung der Teilanzahl an Pixeln, welche das detektierbare Muster 77 erfasst haben, darauf hin, dass der Anhänger 60, 60a und die Zugmaschine 64 einen Winkel 108 zueinander aufweisen. Mit asymmetrischer Verteilung ist vorliegend gemeint, dass beispielsweise in einem Bereich auf der Ankupplungsseite 72 eine Zahl n>0 an Pixeln einen fest vorgegebenen Punkt 78 erfasst hat, während ein anderer symmetrisch angeordneter fest vorgegebener Punkt 78 nur durch eine Zahl m>0 an Pixeln erfasst ist, wobei m<n gilt und m, n eine ganze natürlich Zahl ist. Wäre ein Winkel von etwa 90° zwischen einer Erstreckung der Detektionseinheit 100 und der Ankupplungsseite 72 gegeben, so würde m=n sein. Dies ist gleichbedeutend mit einer Erstreckung der Detektionseinheit 100 parallel zur Erstreckung des Anhängers 60, 60a in z-Richtung (siehe Figur 5).

### Bezugszeichenliste:

- 10:: Anhänger-Steuervorrichtung
- 12:: Sendeeinheit
- 14:: Signalübermittlung
- 16:: Empfangseinheit
- 18:: Signalübermittlung
- 20:: Empfangseinheit
- 24:: Komparator
- 26:: Signalübermittlung
- 28:: Speichereinheit
- 30:: Sendeeinheit
- 32:: Signalübermittlung
- 34:: Energiequelle
- 36:: Positions-Bestimmungseinheit
- 37:: Auswerteeinheit
- 38:: Verschlüsselungseinheit/Entschlüsselungseinheit
- 38a:: Entschlüsselungseinheit
- 38b:: Verschlüsselungseinheit
- 40-50:: Signalübermittlung
- 60:: Anhänger
- 62:: Königszapfen
- 64:: Zugmaschine
- 65:: Ankupplungsseite der Zugmaschine
- 66:: Signalübermittlung
- 68:: Signalübermittlung
- 70:: Externe GPS-Einheit
- 72:: Ankupplungsseite des Anhängers
- 76:: Kamerasystem
- 77: detektierbares Muster
- 78:: fester Punkt
- 80:: System
- 82:: Reifen
- 84:: Flanke
- 91-94:: vorgegebene Position bzw. vorgegebener Bereich
- 100:: Detektionseinheit
- 102:: vordefinierter Abstand
- 104: Erdoberfläche
- 106: aktuelle Entfernung
- 108: Winkel

- H:: Höhe
- B:: Breite
- h:: Höhe zur Erdoberfläche
- h-l:: Höhe zur Erdoberfläche, wobei h-l<h

## Patentansprüche

1. Anhänger (60), an dem eine Anhänger-Steuervorrichtung (10) zum Empfangen und Senden eines Signals montiert ist, wobei die Anhänger-Steuervorrichtung (10) umfasst:
- eine Empfangseinheit (22) zum Empfangen eines Signals von einer externen Sendeeinheit (12),
- einen mit der Empfangseinheit (22) verbundenen Komparator (24) zum Vergleichen des empfangenen Signal mit einem in dem Komparator (24) hinterlegten vorgegebenen Signal,
- eine mit dem Komparator (24) verbundene Sendeeinheit (30) zum Senden eines Antwortsignals an eine externe Empfangseinheit (16) zum Auffinden und/oder zur Identifikation der Anhänger-Steuervorrichtung (10), wenn das empfangene Signal mit dem vorgegebenen Signal übereinstimmt,
wobei die Anhänger-Steuervorrichtung (10) eine Positions-Bestimmungseinheit (36) zum Bestimmen einer aktuellen Position der Anhänger-Steuervorrichtung (10) umfasst,
wobei die Anhänger-Steuervorrichtung (10) zum Steuern der verschiedenen Einheiten ausgebildet ist,
wobei der Komparator (24) dazu ausgebildet ist, das empfangene Signal mit einem vorgegebenen Signal zu vergleichen,
wobei die Anhänger-Steuervorrichtung (10) dazu ausgebildet ist, nach einem Feststellen einer Übereinstimmung zwischen dem empfangenen Signal und dem vorgegebenen Signal die Sendeeinheit (30) derart zu steuern, dass die Sendeeinheit (12) mindestens ein Antwortsignal zum Auffinden und/oder zur Identifikation des Anhängers (60) an eine externe Empfangseinheit (16) sendet,
wobei die Anhänger-Steuervorrichtung (10) an einer vorgegebenen Position an oder in dem Anhänger (60) angeordnet ist,
wobei die Anhänger-Steuervorrichtung (10) mit einem gleichen Abstand zu zwei Flanken (84) des Anhängers angeordnet und in einem definierten Abstand zu einem Königszapfen (62) des Anhängers (60) angeordnet ist, um ein Auffinden des Anhängers (60a, 60) zu ermöglichen,
**dadurch gekennzeichnet, dass** ein von der Anhänger-Steuervorrichtung (10) ausgesendetes Antwortsignal mindestens die folgenden Informationen umfasst:
- Angaben zu den Abmessungen des Anhängers (60) und
- Position des Königszapfens (62) in Relation zur Anhänger-Steuervorrichtung (10) oder zu einer Stirnseite des Anhängers (60).

2. Anhänger (60) nach Anspruch 1, wobei die Anhänger-Steuervorrichtung (10) eine Verschlüsselungseinheit (38, 38b) zum Verschlüsseln des Antwortsignals und/oder Entschlüsselungseinheit (38, 38a) zum Entschlüsseln des empfangenen Signals umfasst, wobei insbesondere die Verschlüsselungseinheit (38, 38b) und/oder die Entschlüsselungseinheit (38, 38a) zwischen der Empfangseinheit (16) und dem Komparator (24) bzw. zwischen der Sendeeinheit (30) und dem Komparator (24) geschaltet ist/sind.

3. Anhänger (60) nach Anspruch 1 oder 2,wobei die Positions-Bestimmungseinheit (36) mit dem Komparator (24) und/oder der Verschlüsselungseinheit (38, 38b) oder der Entschlüsselungseinheit (38, 38a) zur Kommunikation verbunden ist.

4. Anhänger (60) nach einem der vorhergehenden Ansprüche, wobei die Anhänger-Steuervorrichtung (10) eine Speichereinheit (28) zum Speichern des vorgegebenen Signals und/oder der aktuellen Position und/oder des Antwortsignals und/oder anderer Daten umfasst, wobei insbesondere die Speichereinheit (28) mit mindestens einer der anderen umfassten Einheiten der Anhänger-Steuervorrichtung (10), bevorzugt mit dem Komparator (24), zur Kommunikation verbunden ist.

5. Anhänger (60) nach einem der vorhergehenden Ansprüche, wobei die Anhänger-Steuervorrichtung (10) eine Energiequelle zum Versorgen der Anhänger-Steuervorrichtung (10) mit Energie aufweist.

6. Anhänger (60) nach einem der vorhergehenden Ansprüche, wobei die Anhänger-Steuervorrichtung (10) dauerhaft montiert ist.

7. Anhänger (60) nach einem der vorhergehenden Ansprüche, wobei das Antwortsignal ein codiertes Identifikationssignal zum Identifizieren des Anhängers (60) und/oder zum Identifizieren einer aktuellen Position des Anhängers (60) und/oder zur Übermittlung von Anhängerfahrzeugdaten umfasst.

8. Anhänger (60) nach einem der vorhergehenden Ansprüche, wobei ein von der Anhänger-Steuervorrichtung (10) ausgesendetes Antwortsignal mindestens eine der folgenden Informationen umfasst:
- Fahrzeug- und/oder Auftrags-Identifikation,
- allgemeine Angaben zum Anhänger (60) - Ausrichtung des Anhängers (60),
- Auftrags- und/oder Ladungsdaten, insbesondere Daten zum Inhalt und/oder zum Gewicht und/oder Lieferschein,
- Ladungszustand des Anhängers (60),
- Füllstand eines Tankanhängers,
- Kühlraumtemperatur des Anhängers (60),
- Wartungszustand und/oder Wartungsintervalle und/oder Datum der letzten Wartung des Anhängers (60),
- Reifendruck des Anhängers (60),
- Laufleistung des Anhängers (60),
- Fehler- und Wartungsprotokolle des Anhängers (60),
- Zugriffprotokolle auf den Frachtraum des Anhängers (60).

9. Anhänger (60) nach einem der vorhergehenden Ansprüche, wobei zur manuellen Überprüfung zusätzlich eine optische Identifikation, insbesondere ein Barcode, ein Matrixcode, ein Nummerncode oder ein Farbcode an dem Anhänger (60) und/oder an der Anhänger-Steuervorrichtung (10) angeordnet ist.

10. System (80) zum Auffinden und/oder zur Identifikation eines Anhängers (60) mit einer Anhänger-Steuervorrichtung (10) nach einem der vorhergehenden Ansprüche, wobei die Anhänger-Steuervorrichtung (10) mit einer externen Sendeeinheit (12) zum Senden eines Signals an die Anhänger-Steuervorrichtung (10) zum Auffinden des Anhängers (60, 60a) und mit einer externen Empfangseinheit (16) zum Empfangen eines Antwortsignals von der Anhänger-Steuervorrichtung (10) zur Identifikation des aufgefundenen Anhängers (60, 60a) ausgebildet ist, wobei die Anhänger-Steuervorrichtung (10) das Antwortsignal aussendet, wenn eine Übereinstimmung zwischen dem empfangenen Signal und einem in der Anhänger-Steuervorrichtung (10) hinterlegten vorgegebenen Signal festgestellt ist.

11. System (80) nach Anspruch 10, wobei die Anhänger-Steuervorrichtung (10) an dem Anhänger (60) derart montiert ist, dass eine externe Empfangseinheit (16) eine Position des aufgefundenen Anhängers (60, 60a), insbesondere eindeutig, identifiziert.

12. System (80) nach einem der Ansprüche 10 bis 11, wobei die externe Sendeeinheit (12) das mindestens ein Signal zeitgleich an mehrere Anhänger-Steuervorrichtungen (10) sendet.

13. System (80) gemäß Anspruch 11, wobei nur eine Anhänger-Steuervorrichtung (10) nach Feststellung einer Übereinstimmung zwischen dem ausgesendeten Signal und einem in einer Anhänger-Steuervorrichtung (10) hinterlegten vorgegebenen Signals das Antwortsignal an die externe Empfangseinheit (16) sendet.

14. System (80) nach einem der Ansprüche 10 - 11, wobei das Antwortsignal dazu ausgebildet ist, einen automatischen Kupplungsvorgangs zwischen dem aufgefundenen Anhänger (60, 60a) und einer Zugmaschine (64), welches die externe Empfangseinheit (16) umfasst, insbesondere durch Übermittlung von Ortskoordinaten, zu unterstützen.

## Claims

1. A trailer (60), on which a trailer control device (10) for receiving and sending a signal is mounted, wherein the trailer control device (10) comprises:
- a receiver unit (22) for receiving a signal from an external transmitter unit (12),
- a comparator (24) connected to the receiver unit (22) for comparing the received signal with a pre-defined signal stored in the comparator (24),
- a transmitter unit (30) connected to the comparator (24) for sending a response signal to an external receiver unit (16) for locating and/or identifying the trailer control device (10) if the received signal matches the pre-defined signal,
wherein the trailer control device (10) comprises a position determination unit (36) for determining a current position of the trailer control device (10), wherein the trailer control device (10) is designed for controlling the different units,
wherein the comparator (24) is designed to compare the received signal with a pre-defined signal,
wherein the trailer control device (10) is designed, after detecting a match between the received signal and the pre-defined signal, to control the transmitter unit (30) in such a way that the transmitter unit (12) sends at least one response signal for locating and/or identifying the trailer (60) to an external receiver unit (16),
wherein the trailer control device (10) is arranged at a specified position on or in the trailer (60),
wherein the trailer control device (10) is arranged at an equal distance from two edges (84) of the trailer and at a defined distance from a king pin (62) of the trailer (60) to enable a location of the trailer (60a, 60),
**characterized in that** a response signal emitted by the trailer control device (10) comprises at least the following pieces of information:
- information on the dimensions of the trailer (60) and
- position of the king pin (62) in relation to the trailer control device (10) or to a front side of the trailer (60).

2. The trailer (60) as claimed in claim 1, wherein the trailer control device (10) comprises an encryption unit (38, 38b) for encrypting the response signal and/or a decryption unit (38, 38a) for decrypting the received signal, wherein, in particular, the encryption unit (38, 38b) and/or the decryption unit (38, 38a) is/are connected between the receiver unit (16) and the comparator (24) or between the transmitter unit (30) and the comparator (24).

3. The trailer (60) as claimed in claim 1 or 2, wherein the position determination unit (36) is connected to the comparator (24) and/or the encryption unit (38, 38b) or the decryption unit (38, 38a) for communication purposes.

4. The trailer (60) as claimed in any one of the preceding claims, wherein the trailer control device (10) comprises a memory unit (28) for storing the pre-defined signal and/or the current position and/or the response signal and/or other data, wherein in particular the memory unit (28) is connected to at least one of the other units comprised by the trailer control device (10), preferably to the comparator (24), for the purpose of communication.

5. The trailer (60) as claimed in any one of the preceding claims, wherein the trailer control device (10) has an energy source for supplying the trailer control device (10) with energy.

6. The trailer (60) as claimed in any of the preceding claims, wherein the trailer control device (10) is permanently mounted.

7. The trailer (60) as claimed in any one of the preceding claims, wherein the response signal comprises a coded identification signal for identifying the trailer (60) and/or for identifying a current position of the trailer (60) and/or for transmitting trailer vehicle data.

8. The trailer (60) as claimed in any one of the preceding claims, wherein a response signal emitted by the trailer control device (10) comprises at least one of the following pieces of information:
- vehicle and/or order identification,
- general data relating to the trailer (60) - alignment of the trailer (60),
- order and/or load data, in particular data relating to the contents and/or weight and/or delivery note,
- loading state of the trailer (60),
- fill level of a tank trailer,
- refrigerated room temperature of the trailer (60),
- maintenance condition and/or maintenance intervals and/or date of the last maintenance of the trailer (60),
- tire pressure of the trailer (60),
- mileage of the trailer (60),
- fault and maintenance logs of the trailer (60),
- access logs for the cargo compartment of the trailer (60).

9. The trailer (60) as claimed in any one of the preceding claims, wherein for the purpose of manual inspection an optical identification, in particular, a bar code, a matrix code, a number code or a color code is additionally arranged on the trailer (60) and/or on the trailer control device (10).

10. A system (80) for locating and/or identifying a trailer (60) as claimed in any one of the preceding claims, wherein the trailer control device (10) having an external transmitter unit (12) for sending a signal to the trailer control device (10) to locate the trailer (60, 60a) and having an external receiver unit (16) for receiving a response signal from the trailer control device (10) for the identification of the located trailer (60, 60a), wherein the trailer control device (10) emits the response signal if a match is detected between the received signal and a pre-defined signal stored in the trailer control device (10).

11. The system (80) as claimed in claim 10, wherein the trailer control device (10) is mounted on the trailer (60) in such a way that an external receiver unit (16) identifies, in particular uniquely, a position of the located trailer (60, 60a).

12. The system (80) as claimed in either of claims 10 to 11, wherein the external transmitter unit (12) sends the at least one signal to a plurality of trailer control devices (10) at the same time.

13. The system (80) as claimed in claim 11, wherein after detection of a match between the emitted signal and a pre-defined signal stored in a trailer control device (10), only one trailer control device (10) sends the response signal to the external receiver unit (16).

14. The system (80) as claimed in either of claims 10 - 11, wherein the response signal is designed to support an automatic coupling process between the located trailer (60, 60a) and a traction vehicle (64) which comprises the external receiver unit (16), in particular by the transmission of location coordinates.

## Revendications

1. Remorque (60) sur laquelle est monté un dispositif de commande de remorque (10) destiné à recevoir et à émettre un signal, le dispositif de commande de remorque (10) comprenant :
- une unité de réception (22) pour recevoir un signal d'une unité d'émission externe (12),
- un comparateur (24) connecté à l'unité de réception (22) pour comparer le signal reçu avec un signal prédéterminé mémorisé dans le comparateur (24),
- une unité d'émission (30) connectée au comparateur (24) pour émettre un signal de réponse à une unité de réception externe (16) pour localiser et/ou identifier le dispositif de commande de remorque (10) lorsque le signal reçu coïncide au signal prédéterminé,
dans lequel
le dispositif de commande de remorque (10) comprend une unité de détermination de position (36) pour déterminer une position actuelle du dispositif de commande de remorque (10),
le dispositif de commande de remorque (10) est réalisé pour commander les différentes unités,
le comparateur (24) est réalisé pour comparer le signal reçu à un signal prédéterminé,
le dispositif de commande de remorque (10) est réalisé pour commander, après constatation d'une coïncidence entre le signal reçu et le signal prédéterminé, l'unité d'émission (30) de telle sorte que l'unité d'émission (12) émet à une unité de réception externe (16) au moins un signal de réponse pour localiser et/ou identifier la remorque (60),
le dispositif de commande de remorque (10) est disposé à une position prédéterminée sur ou dans la remorque (60),
le dispositif de commande de remorque (10) est disposé à la même distance de deux flancs (84) de la remorque et est disposé à une distance définie du pivot d'attelage (62) de la remorque (60) pour permettre de localiser la remorque (60a, 60),
**caractérisé en ce que**
un signal de réponse émis par le dispositif de commande de remorque (10) inclut au moins les informations suivantes :
- des indications sur les dimensions de la remorque (60), et
- la position du pivot d'attelage (62) par rapport au dispositif de commande de remorque (10) ou à une face frontale de la remorque (60).

2. Remorque (60) selon la revendication 1,
dans laquelle
le dispositif de commande de remorque (10) comprend une unité de cryptage (38, 38b) pour crypter le signal de réponse, et/ou une unité de décryptage (38, 38a) pour décrypter le signal reçu, et
en particulier l'unité de cryptage (38, 38b) et/ou l'unité de décryptage (38, 38a) est/sont connectée(s) entre l'unité de réception (16) et le comparateur (24), respectivement entre l'unité d'émission (30) et le comparateur (24).

3. Remorque (60) selon la revendication 1 ou 2,
dans laquelle
l'unité de détermination de position (36) est reliée au comparateur (24) et/ou à l'unité de cryptage (38, 38b) ou à l'unité de décryptage (38, 38a) pour la communication.

4. Remorque (60) selon l'une des revendications précédentes,
dans laquelle
le dispositif de commande de remorque (10) comprend une unité de mémoire (28) pour mémoriser le signal prédéterminé et/ou la position actuelle et/ou le signal de réponse et/ou d'autres données, et
en particulier l'unité de mémoire (28) est reliée au moins à l'une des autres unités comprises du dispositif de commande de remorque (10), de préférence au comparateur (24), pour la communication.

5. Remorque (60) selon l'une des revendications précédentes,
dans laquelle
le dispositif de commande de remorque (10) comprend une source d'énergie pour alimenter le dispositif de commande de remorque (10) en énergie.

6. Remorque (60) selon l'une des revendications précédentes,
dans laquelle
le dispositif de commande de remorque (10) est monté en permanence.

7. Remorque (60) selon l'une des revendications précédentes,
dans laquelle
le signal de réponse comprend un signal d'identification codé pour identifier la remorque (60) et/ou pour identifier une position actuelle de la remorque (60) et/ou pour transmettre les données techniques de la remorque.

8. Remorque (60) selon l'une des revendications précédentes,
dans laquelle
un signal de réponse émis par le dispositif de commande de remorque (10) comprend l'une au moins des informations suivantes :
- l'identification du véhicule et/ou d'un ordre de commande,
- des informations générales sur la remorque (60),
- l'orientation de la remorque (60),
- des données de l'ordre de commande et/ou de la charge, en particulier des données relatives au contenu et/ou au poids et/ou au bordereau de livraison,
- l'état de chargement de la remorque (60),
- le niveau de remplissage d'une remorque citerne,
- la température de la chambre froide de la remorque (60),
- l'état d'entretien et/ou les intervalles d'entretien et/ou la date du dernier entretien de la remorque (60),
- la pression des pneus de la remorque (60),
- le kilométrage de la remorque (60),
- les journaux de panne et d'entretien de la remorque (60),
- les journaux d'intervention à la zone de chargement de la remorque (60).

9. Remorque (60) selon l'une des revendications précédentes,
dans laquelle
pour l'inspection manuelle, il est prévu en supplément une identification optique, en particulier un code à barres, un code matriciel, un code numérique ou un code couleur, disposé sur la remorque (60) et/ou sur le dispositif de commande de remorque (10).

10. Système (80) de localisation et/ou d'identification d'une remorque (60) selon l'une des revendications précédentes,
dans lequel
le dispositif de commande de remorque (10) est réalisé avec une unité d'émission externe (12) pour émettre un signal au dispositif de commande de remorque (10) pour localiser la remorque (60, 60a) et avec une unité de réception externe (16) pour recevoir un signal de réponse du dispositif de commande de remorque (10) pour identifier la remorque localisée (60, 60a),
le dispositif de commande de remorque (10) émet le signal de réponse lorsqu'une coïncidence entre le signal reçu et un signal prédéterminé mémorisé dans le dispositif de commande de remorque (10) est constatée.

11. Système (80) selon la revendication 10,
dans lequel
le dispositif de commande de remorque (10) est monté sur la remorque (60) de telle manière qu'une unité de réception externe (16) identifie, en particulier de manière univoque, une position de la remorque (60, 60a) localisée.

12. Système (80) selon l'une des revendications 10 à 11,
dans lequel
l'unité d'émission externe (12) émet ledit au moins un signal simultanément à une pluralité de dispositifs de commande de remorque (10).

13. Système (80) selon la revendication 11,
dans lequel
un seul dispositif de commande de remorque (10) émet le signal de réponse à l'unité de réception externe (16) après constatation d'une coïncidence entre le signal émis et un signal prédéterminé mémorisé dans un dispositif de commande de remorque (10).

14. Système (80) selon l'une des revendications 10 à 11,
dans lequel
le signal de réponse est adapté pour assister une opération d'attelage automatique entre la remorque (60, 60a) localisée et un véhicule tracteur (64) comprenant l'unité de réception externe (16), en particulier par transmission de coordonnées locales.
